# DEMANDE DE BREVET EUROPEEN

(11) **EP 0 962 803 A1**
(43) Date de publication de la demande: **08.12.1999**
(21) Numéro de dépôt: 98110406.0
(22) Date de dépôt: 08.06.1998
(51) Int. Cl.: G02F 1/13, G02F 1/1333, H01G 9/20

(54) **Procédé de fabrication de cellules électro-optiques ou de cellules photovoltaiques électrochimiques en lot**

(71) Demandeur: ASULAB S.A., CH-2501 Bienne (CH)
(72) Inventeur: Grupp, Joachim, 2003 Neuchâtel (CH); Klappert, Rolf, 2003 Neuchâtel (CH)
(74) Mandataire: Ravenel, Thierry Gérard Louis

(57) **Abrégé**

L'invention concerne un procédé de fabrication d'une pluralité de cellules à cristaux liquides, caractérisé en ce que la première et/ou la deuxième plaque dans desquelles les substrats des cellules sont formées comprennent des ouvertures d'accès aux plages de connexion des cellules individuelles, situées respectivement sur la deuxième et/ou la première plaque.

## Description

La présente invention concerne un procédé de fabrication de cellules électro-optiques, notamment à cristaux liquides, ou de cellules photovoltaïques électrochimiques, chaque cellule comprenant une laine avant transparente et une lame arrière transparente ou non sur lesquelles on réalise un réseau d'éléments conducteurs formant des électrodes et des pistes conductrices reliant ces électrodes à des plages de connexion, les deux lames étant réunies entre elles au moyen d'un cadre de scellement définissant un volume étanche dans lequel est emprisonné un milieu actif.

Par cellule électro-optique on entend une cellule d'affichage dont les caractéristiques électro-optiques des cristaux liquides emprisonnés entre les deux lames de cette cellule peuvent être modifiées par des signaux électriques de commande appliqués aux électrodes. Par ailleurs, les cellules photovoltaïques électrochimiques sont des cellules capables de convertir la lumière visible en électricité en exploitant l'effet photoélectrique qui apparaît dans un substrat semi-conducteur sensibilisé par un colorant.

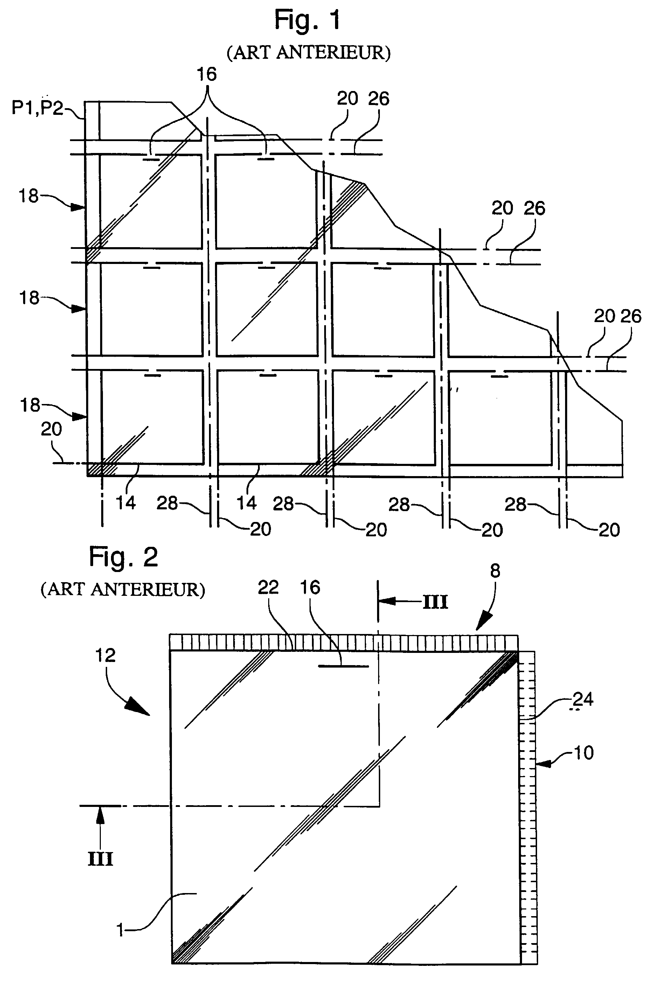

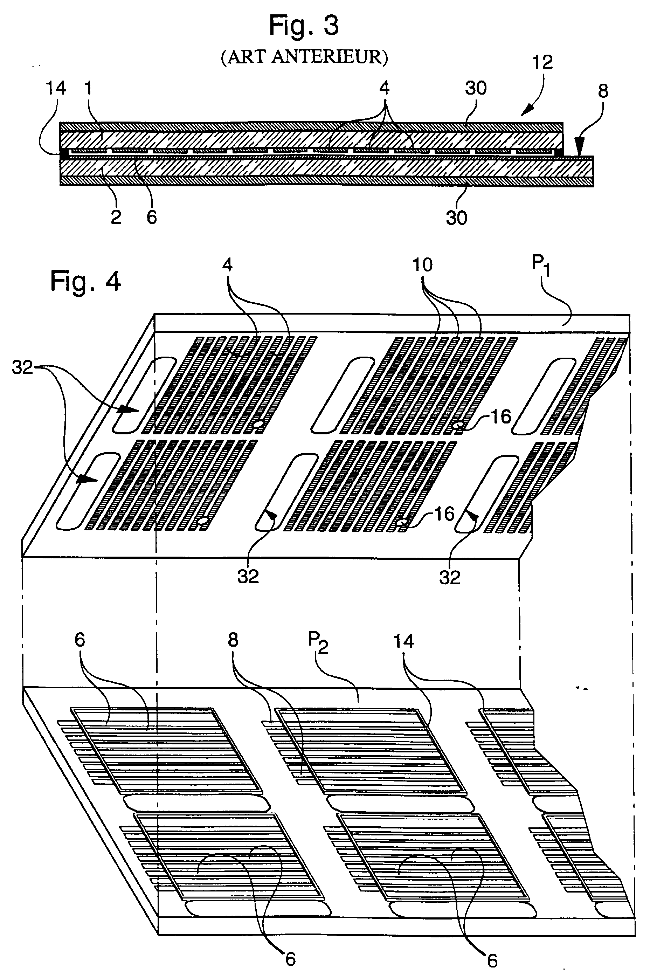

Un procédé de fabrication en lot de cellules d'affichage à cristaux liquides du genre décrit ci-dessus, appartenant à l'art antérieur, va être examiné en référence aux figures 1 à 3 annexées à la présente demande, la figure 1 étant une vue schématique partielle en plan d'un lot de cellules d'affichage à cristaux liquides en cours de fabrication, et les figures 2 et 3 étant des vues respectivement en plan et en coupe selon la ligne III-III de la figure 2 d'une cellule d'affichage individuelle.

Le procédé ci-dessus consiste à réaliser, classiquement par photolithographie, sur deux grandes plaques respectivement avant P1 et arrière P2 un réseau d'éléments conducteurs transparents (non représenté aux figure 1 et 2). Ces plaques P1 et P2 dans lesquelles les substrats 1 et 2 (figure 3) des cellules individuelles seront ultérieurement formés sont réalisées en verre ou en un matériau synthétique et l'une au moins d'entre elles est transparente. Les éléments conducteurs forment des électrodes de commande 4 et 6. Ces électrodes 4, 6 sont situées à l'emplacement des motifs à afficher et des pistes conductrices les relient à des plages de connexion 8 et 10 situées à la périphérie de chaque cellule 12. On dépose ensuite sur l'une des plaques P1, P2 un réseau de matière formant des cadres de scellement 14 qui définissent chacun un volume étanche dans lequel seront ultérieurement emprisonnés les cristaux liquides. A cet effet, on ménage dans les cadres de scellement 14 une ouverture de remplissage 16 pour chaque cellule 12, puis on assemble les plaques P1 et P2 pour former un ensemble comprenant plusieurs rangées de cellules 12 ouvertes. On divise alors cet ensemble en bandes rectilignes 18 par des techniques de rayage et de cassure du verre, ou par sciage le long de lignes de partage 20 qui forment les bords longitudinaux des bandes 18.

A la suite de l'opération d'individualisation, des bords rectilignes 22 et 24 des cellules 12 sont classiquement tracés par rayage au moyen d'un outil à diamant. On crée ainsi à la surface des substrats 1 et 2 des lignes de moindre résistance mécanique telles que 26 et 28, ces lignes étant respectivement parallèles et perpendiculaires aux lignes de partage 20. Après découpe d'une bande 18, le verre peut être cassé manuellement selon les lignes 26 et 28, par une légère flexion transversalement à ladite bande 18, laissant ainsi apparaître les plages de connexion 8 et 10 des cellules 12. Comme représenté sur les figures 2 et 3, chaque cellule 12 présente des bords rectilignes 22 et 24 où le substrat arrière 2, respectivement avant 1, fait saillie par rapport au substrat avant 1, respectivement arrière 2, afin de laisser apparaître les plages de connexion 8 et 10 auxquelles on peut accéder pour établir la liaison électrique entre les électrodes 4, 6 de la cellule 12 et un circuit électrique de commande (non représenté) capable de modifier les caractéristiques électro-optiques des cristaux liquides.

Ces lignes de partage 20 sont rectilignes et parallèles et sont représentées en traits mixtes sur la figure 1. Les ouvertures de remplissage 16 étant toutes situées le long du même bord longitudinal de la bande 18, il est facile de remplir les cellules 12 puis de sceller hermétiquement leur ouverture de remplissage 16. Les bandes 18 sont finalement divisées en cellules 12 individuelles rectangulaires selon des droites perpendiculaires aux précédentes. A ce stade, si le contour des cellules 12 doit présenter des partie s'écartant de la forme rectangulaire, on façonne ces parties par meulage. Les éventuelles couches extérieures telles que, par exemple, un film polarisant 30, sont découpées aux dimensions des cellules et appliquées ultérieurement, car elles risqueraient autrement d'être détériorées par les opérations de coupe et de meulage.

Une fois les plages de connexion 8 et 10 dégagées, on teste les paramètres optiques et les paramètres électriques de chaque cellules 12 terminées. Pour ce faire les cellules terminées 12 sont prélevée une à une et connectées à un circuit électronique d'adressage (non représenté) qui permet d'activer séquentiellement tous les segments ou pixels formés par les électrodes 4 et 6 de la cellule 12 à tester. L'activation des segments est détectée visuellement par un opérateur ou à l'aide de moyens optiques tels que des dispositifs de reconnaissance optique. On mesure ensuite certains paramètres électriques de la cellule 12 afin de vérifier qu'il n'existe aucun court-circuit total ou partiel au niveau des électrodes 4 et 6.

Ces étapes de test sont à effectuer individuellement sur chaque cellule 12 ce qui rend les opérations de test plus complexes et plus coûteuses que si ces tests pouvaient être réalisés sur de cellules 12 terminées encore en lot, c'est-à-dire non encore individualisées.

La présente invention a pour but de remédier aux problèmes et inconvénients ci-dessus en proposant un procédé de fabrication collective de cellules électro-optiques ou photovoltaïques électrochimiques permettant de tester les caractéristiques optiques et électriques des cellules terminées avant qu'elles ne soient détachées du lot.

A cet effet, la présente invention a pour objet un procédé de fabrication d'une pluralité de cellules électro-optiques, notamment à cristaux liquides, ou de cellules photovoltaïques électrochimiques, comprenant les étapes qui consistent à :
- se munir d'une première et deuxième plaques en verre ou en un matériau synthétique commune à toutes les cellules et dans lesquelles seront formés respectivement les substrats supérieur et inférieur des cellules individuelles, au moins l'une de ces plaques étant transparente;
- réaliser sur les faces des première et deuxième plaques destinées à venir en regard l'une de l'autre, un réseau d'éléments conducteurs, chaque réseau étant associé à une cellule individuelle, les éléments conducteurs de ces réseaux formant des électrodes situées à l'emplacement des motifs à afficher, ainsi que des plages de connexion et des pistes conductrices reliant lesdites électrodes auxdites plages de connexion situées sur l'une et/ou l'autre desdites plaques;
- déposer sur au moins l'une desdites plaques un réseau de matière scellement pour former des cadres de scellement, chaque cadre de scellement étant associé à une cellule individuelle;
- assujettir les première et deuxième plaques pour former un lot comprenant plusieurs rangées de cellules; et
- remplir avec un milieu actif les cavités de chaque cellule, ces cavités étant définies par les première et deuxième plaques et les cadres de scellement,
   ce procédé étant caractérisé en ce que la première et/ou la deuxième plaque comprend des ouvertures d'accès aux plages de connexion situées respectivement sur la deuxième et/ou la première plaque.

Grâce à ces caractéristiques, le procédé selon l'invention permet pratiquement de faire apparaître les plages de connexions des cellules individuelles et ainsi de tester leurs paramètres optiques et électriques alors que les cellules sont encore en lot. Ceci permet de minimiser les opérations de manipulation fastidieuses des cellules individuelles notamment lors de l'exécution des étapes de test, et ainsi de réduire considérablement les coûts de fabrication des cellules. Par ailleurs, il est possible, grâce à ce procédé, de découvrir tout défaut optique ou électrique à un stade encore assez avancé dans le processus de fabrication et donc d'éviter de soumettre les cellules testés défectueuses à d'éventuelles étapes de fabrication et de traitement ultérieurs.

Ce procédé est également avantageux en ce qu'une fois que le lot est divisé en cellules individuelles par exemple par rayage et cassure des plaques suivant des droites parallèles lorsqu'il s'agit de cellules à bords parallèles ou par des techniques de découpage au jet d'eau s'il s'agit de cellules ayant un contour de forme quelconque, il n'est plus nécessaire de procéder au rayage des bords rectilignes des cellules qui permet après cassure de ces bords de faire apparaître les plages de connexions des cellules individuelles.

On notera également que de manière avantageuse ce procédé permet d'effectuer les tests électriques avec un posage de test unique ayant des dimensions extérieures toujours identiques, indépendamment des dimensions des cellules du lot, les dimensions du posage correspondant aux dimensions des plaques formant les substrats des cellules. Selon l'art antérieur, il est nécessaire de fabriquer pour chaque type de cellule un posage de test spécifique.

Selon une premier mode réalisation, les ouvertures d'accès sont indépendantes les unes des autres et associées chacune à une cellule individuelle.

Selon un deuxième mode de réalisation, les cellules sont réparties en rangées et en colonnes, et les ouvertures d'accès sont communes à toutes les cellules d'une colonne ou d'une rangée.

D'autres caractéristiques et avantages de la présente invention apparaîtront plus clairement à la lecture de la description détaillée qui suit d'un exemple de mise en oeuvre du procédé selon l'invention, cet exemple étant donné à titre purement illustratif et non limitatif, en liaison avec les dessins annexés dans lesquels :
- la figure 1, déjà mentionnée, est une vue schématique partielle en plan d'un lot de cellules d'affichage à cristaux liquides en cours de fabrication selon un procédé de l'art antérieur;
- la figure 2, déjà mentionnée, est une vue en plan d'une cellule d'affichage individuelle selon l'art antérieur;
- la figure 3, déjà mentionnée, est une vue en coupe selon la ligne III-III de la figure 2;
- la figure 4 est une vue schématique partielle éclatée d'un lot de cellules d'affichage à cristaux liquides selon le procédé de fabrication de l'invention;
- la figure 5 est une vue partielle en plan d'un lot de cellules d'affichage à cristaux liquides en cours de fabrication, avant l'étape finale d'individualisation selon le procédé de l'invention;
- la figure 6 est une vue en plan d'une cellule d'affichage obtenue directement par découpage du lot représenté à la figure 5, et
- la figure 7 est une vue en coupe selon la ligne VII-VII de la figure 5.

Dans tout ce qui suit, on désignera les éléments identiques à ceux décrits précédemment par les mêmes références numériques.

On notera tout d'abord que, bien que la présente invention soit décrite en référence à une cellule d'affichage électro-optique, elle s'applique de manière identique aux cellules photovoltaïques électrochimiques du genre décrit ci-dessus.

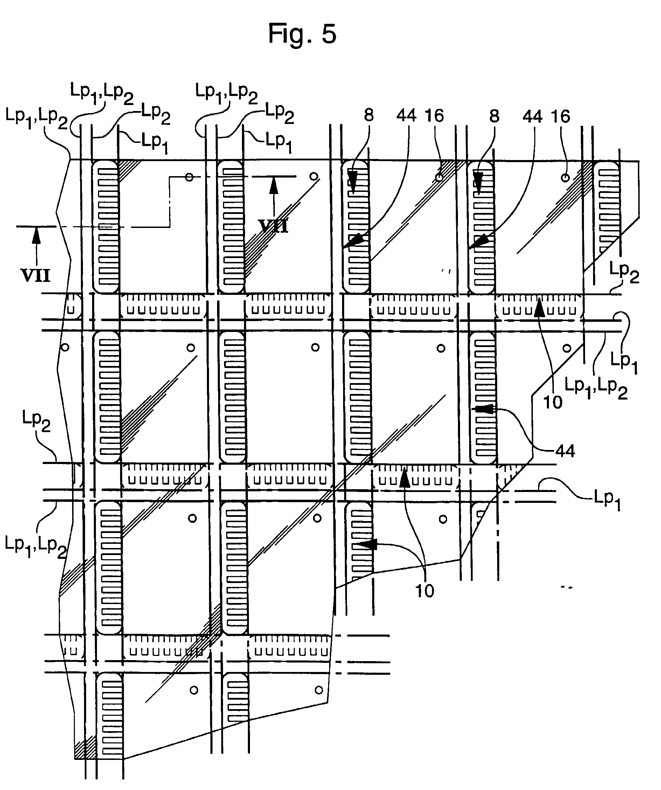

En se référant aux figures 4 et 5, on voit un ensemble de cellules d'affichage 12, réparties en rangées et colonnes, en cours de fabrication selon le procédé de l'invention. Ces cellules 12 sont définies par une plaque avant P1 et une plaque arrière P2 généralement transparentes, par exemple deux plaques de verre. Bien entendu d'autres matériaux tels que des matériaux synthétiques peuvent être envisagés. Les plaques avant P1 et arrière P2 sont communes à toutes les cellules 12 et sont destinées à former respectivement les substrats 1 et 2 de chaque cellule individuelle 12.

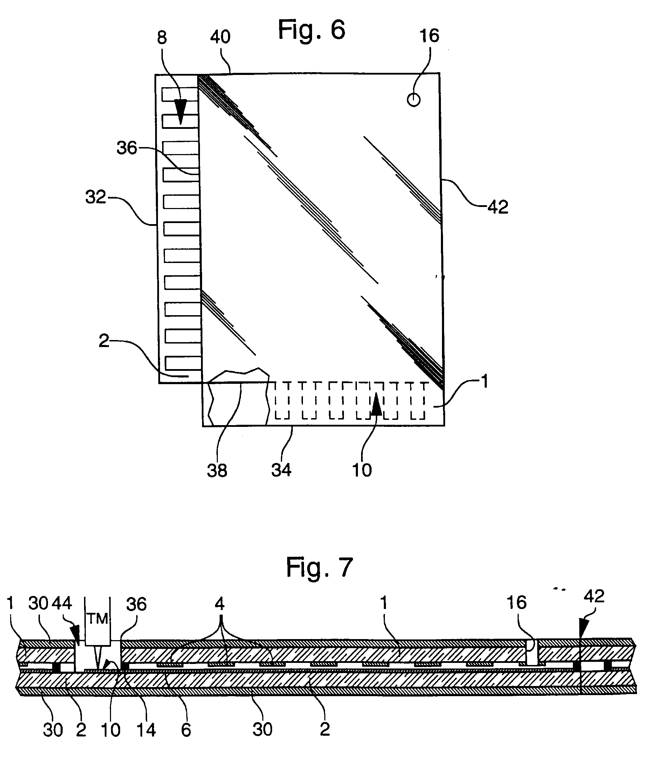

Comme cela ressort de la figure 7, chaque cellule 12 terminée comporte une cavité destinée à contenir les cristaux liquides, cette cavité étant définie par les substrats 1, 2 revêtus d'électrodes transparentes 4, 6, et par les cadres de scellement 14 faits d'une matière qui permet de solidariser les substrats 1, 2 l'un sur l'autre. Une ouverture de remplissage 16 est ménagée dans l'épaisseur du substrat 1 de chaque cellule 12, cette ouverture étant bloquée classiquement par un bouchon de colle après remplissage des cellules 12.

Les surfaces en regard des plaques P1 et P2 comprennent chacune un réseau d'éléments conducteurs transparents parallèles, ces réseaux étant formés des électrodes 4 et 6 (figure 4), des plages de connexion 8 et 10 et des pistes conductrices non référencées qui relient ces électrodes 4 et 6 aux plages de connexion 8 et 10.

Dans l'exemple représenté, les électrodes 4 et 6 s'étendent perpendiculairement les unes par rapport aux autres et définissent entre les plaques P1 et P2 des matrices de pixels dont les pixels sont situés aux points de croisement des électrodes 4 et 6 de chacune des plaques P1 et P2. Les électrodes 4 et 6 sont formées d'une bande conductrice déposée par des techniques classiques de photolitographie et sont de préférence réalisée en oxyde d'indium-étain (ITO).

A la figure 6, on comprend également que chaque cellule 12 terminée comporte deux bords rectilignes 32, 34 où les substrats arrière 2 respectivement avant 1 font saillie latéralement par rapport aux deux autres bords 36, 38 respectivement des substrats avant et arrière pour laisser apparaître les plages de connexion 8 et 10 formées dans l'exemple illustrée par des prolongements des électrodes 4, respectivement 6, au delà des cadres de scellement 14. Par conséquent, seuls deux des bords 40, 42 extérieurs des substrats avant 1 et arrière 2 sont alignés dans cet exemple.

On notera que selon une variante non représentée, les plages de connexion 8 des électrodes 4 peuvent être renvoyées de façon classique sur la plaque P2, de sorte que les plages de connexion des électrodes des plaques P1 et P2 se trouvent le long d'un même bord rectiligne saillant. Dans un tel exemple (non représenté), trois des bords extérieurs des substrats avant et arrière semblent alignes.

En appliquant une tension de commande via les plages de connexion 8 et 10, sur certaines des électrodes 4 et 6 d'une cellule 12, il est possible de modifier les conditions optiques des cristaux liquides situés au point de croisement considéré des électrodes activées, comme cela est bien connu de l'homme de métier.

Selon une caractéristique de l'invention, et comme cela ressort particulièrement de la figure 4, les plaques avant P1 et arrière P2 comprennent des ouvertures 44 d'accès aux plages de connexion 8 et 10 situées respectivement sur la plaque arrière P2 et la plaque avant P1. Ces ouvertures 44 s'étendent parallèlement aux bords 36 et 38 du contour des cellules situés juste au droit des plages de connexion 8 et 10 et permettent, lorsque les plaques P1 et P2 sont assemblées (figure 5), un accès direct à toutes les plages de connexion 8 et 10 de chaque cellules 12.

Dans l'exemple représenté, les ouvertures d'accès 44 d'une même plaque P1 ou P2 sont indépendantes les unes des autres et associées chacune à une cellule individuelle 12. Il est toutefois bien entendu envisageable selon une variante de réalisation non représentée de prévoir des ouvertures d'accès communes à toutes les cellules 12 d'une colonne ou d'une rangée.

Dans le cas où les renvois des plages de connexion 10 des électrodes 4 de la plaque P1 à la plaque P2 sont souhaités ou faciles à réaliser, on peut aussi prévoir que les cellules 12 terminées ne comportent qu'un bord rectiligne où le substrat arrière 2 fait saillie latéralement par rapport aux trois autres bords pour laisser apparaître près du bord les plages de connexion 8 formées par des prolongements des électrodes 6 au delà des cadres de scellement 14 ainsi que par les plages de connexion 8 des électrodes 4 renvoyées sur la plaque P2. Dans cette variante de réalisation, il n'est nécessaire de prévoir des ouvertures d'accès 44 aux plages de connexion 8 et 10, similaires à celles décrites ci-dessus que dans la plaque P1.

La fabrication des cellules 12 selon l'invention s'effectue de la manière suivante dans le cas de cellules à cristaux liquides classiques du type nématique en hélice.

On dépose les électrodes 4, 6 et des pistes reliant ces électrodes 4, 6 aux plages de connexion 8 et 10 respectivement sur les plaques P1 et P2. On dépose ensuite classiquement les couches d'alignements, par exemple en polyamide (non représentées), au dessus des électrodes 4 et 6 et on les polymérise.

On protège ensuite les surfaces des plaques P1 et P2 portant les électrodes 4 et 6 et les couches d'alignement, par exemple à l'aide d'une couche de résine photosensible déposée de façon classique.

On applique sur la surface externe de chaque plaque P1 et P2, c'est-à-dire sur les surfaces ne portant pas les électrodes, toutes les couches extérieures nécessaires telles qu'un film polarisant 30.

On découpe ensuite dans la plaque P1 et dans la plaque P2 les ouvertures 44 qui permettront, après l'étape d'assemblage des plaques P1 et P2, de faire apparaître les plages de connexion 8 et 10 de chacune des cellules 12.

On réalise le découpage de ces ouvertures d'accès 44, de préférence en une seule étape de travail aux moyens d'une machine de découpage à jet d'eau à très haute pression, par exemple à commande automatique. Le jet d'eau et la buse qui le produit sont de préférence stationnaires, tandis que la machine déplace la plaque à découper dans un plan de façon que le jet suive les contours des ouvertures à découper sur les plaques.

Toutefois, des techniques employant un jet mobile sont aussi utilisables. Il va de soi que d'autres moyens peuvent être mis en oeuvre pour réaliser ces ouvertures, on pourra par exemple utiliser des machine à découpage à jet de sable ou au laser (CO2 ou Excimer).

On profite également du passage sur la machine de découpage pour percer l'ouverture de remplissage 16 dans l'épaisseur d'une des plaques, par exemple P1 pour chaque cellule 12 du lot.

On élimine alors la couche de protection qui avait été déposée sur les couches d'alignement et on procède au nettoyage des plaques P1 et P2 munies respectivement de leur film polarisant 30 et comportant les ouvertures d'accès 44.

On dépose ensuite sur la face portant les électrodes d'au moins l'une des plaques P1, P2 la matière définissant les cadres de scellement 14, en veillant à ce que les ouvertures de remplissage 16 soient circonscrites par les cadres de scellement 14. Les cadres 14 sont généralement réalisés à l'aide d'une colle polymérisable à basse température.

On assemble alors les plaques P1, P2 l'une sur l'autre.

Les cellules 12 sont ensuite remplies avec du cristal liquide via les ouvertures de remplissage 16 qui sont ensuite hermétiquement scellées au moyen d'un bouchon de colle par des techniques connues.

Il suffit ensuite de procéder aux tests de contrôle des paramètres optiques et électriques des cellules 12 encore en lot ou, le cas échéant, après que le lot ait été découpé en bandes.

Ces tests consistent, pour chaque cellule et successivement, à amener des pointes de test d'une tête de mesure TM, en contact avec les plages de connexions 8 et 10 d'une cellule 12, et à activer séquentiellement tous les pixels de cette cellule à l'aide d'un circuit électronique d'adressage de test et à mesurer, de façon classique, des paramètres optiques et électriques déterminés.

Selon une variante, il est bien entendu possible d'utiliser plusieurs têtes de mesures et d'effectuer ces opérations de test simultanément sur plusieurs cellules 12.

Selon une variante de réalisation de l'invention, les ouvertures de remplissage ne sont pas réalisés dans l'épaisseur d'une des plaques P1 ou P2 mais dans le cadre de scellement. Dans ce cas, le lot doit être divisé en plusieurs sous-ensembles en forme de bandes rectilignes comprenant, par exemple, des rangées de cellules de sorte que chaque cellule comporte au moins un bord rectiligne formé par un bord de la bande, les ouvertures de remplissage des cellules de la bande étant accessibles depuis ce bord rectiligne.

La dernière étape de mise en oeuvre du procédé consiste à individualiser les cellules 12 par exemple au moyen d'une machine de découpage à jet d'eau sous haute pression qui découpe le contour des cellules 12.

Cette étape d'individualisation peut bien entendu être aussi réalisée par des techniques de rayage et de cassure du verre, ou encore par sciage le long de lignes de partage prédéterminées. A titre d'exemple on a représenté à la figure 5 une trame de ligne de partage référencées Lp1 et Lp2 tracées respectivement sur les plaques avant 1 et arrière 2, en vue d'un découpage par rayage et cassure.

De manière avantageuse, on remarquera que si l'on procède à un découpage des cellules 12 le long des bords extrêmes des ouvertures d'accès 32, les cellules individuelles ainsi découpées sont prêtes à l'emploi et, en particulier ne nécessitent aucune opération de découpage supplémentaire pour dégager les plages de connexion.

Le procédé de fabrication qui vient d'être décrit présente donc l'avantage de pouvoir effectuer toutes les étapes de fabrication jusqu'à l'étape d'individualisation sur un lot de cellules, ce qui réduit ainsi le nombre d'opérations de fabrication par cellules et donc leur prix de revient au minimum. En procédant ainsi, on réduit également le nombre d'outils de production et de posage. En particulier, ce procédé permet d'éviter l'utilisation d'étampes de précision, très chère, pour le découpage des films polarisants, les seules étampes utilisées étant identiques pour chaque lot quelle que soit les dimensions des cellules du lot.

Il va de soi que diverses modifications et variantes simples entrent dans le cadre de la présente invention. En particulier dans le cas de la fabrication de cellules du type à cristaux liquides dispersés dans un polymère, plus connues sous leur désignation anglo-saxonne "Polymer Dispersed Liquid Crystal" (PDLC), on notera que le cadre de scellement s'étend sur toute la surface des substrats de chaque cellule et peut être formé par le polymère qui enveloppe les gouttes de cristaux liquides et qui solidarise ces substrats. Dans ce cas, on entend, par étape de remplissage de chaque cellule, soit l'introduction d'un mélange liquide ou semi-liquide d'un monomere et de cristaux liquides dans la cavité de chaque cellule, la cavité étant définie par un cadre de scellement classique et deux substrats, soit l'interposition d'une émulsion ou d'un film comprenant les cristaux liquides et un polymère.

On pourra également envisager, avant l'étape de découpage sur une des plaques 11 ou 12 une couche de protection contre le rayonnement ultraviolet. De même, avant la mise en oeuvre de cette étape de découpage, on pourra appliquer sur une seule desdites plaques P1 ou P2 une couche d'absorption de couleur noire.

## Revendications

1. Procédé de fabrication d'une pluralité de cellules électro-optiques, notamment à cristaux liquides, ou de cellules photovoltaïques électrochimiques, comprenant les étapes qui consistent à :
- se munir d'une première et deuxième plaques en verre ou en un matériau synthétique commune à toutes les cellules et dans lesquelles seront formés respectivement les substrats supérieur et inférieur des cellules individuelles, au moins l'une de ces plaques étant transparente,
- réaliser sur les faces des première et deuxième plaques destinées à venir en regard l'une de l'autre, un réseau d'éléments conducteurs, chaque réseau étant associé à une cellule individuelle, les éléments conducteurs de ces réseaux formant des électrodes situées à l'emplacement des motifs à afficher ainsi que des plages de connexion et des pistes conductrices reliant lesdites électrodes auxdites plages de connexion situées sur l'une et/ou l'autre desdites plaques;
- déposer sur au moins l'une plaques un réseau de matière scellement pour former des cadres de scellement chaque cadre de scellement étant associé à une cellule individuelle;
- assujettir les première et deuxièmes plaques pour former un lot comprenant plusieurs rangées de cellules; et
- remplir avec un milieu actif les cavités de chaque cellule, ces cavités étant définies par les première et deuxième plaques et les cadres de scellement,
ce procédé étant caractérisé en ce que la première et/ou la deuxième plaque comprend des ouvertures d'accès aux plages de connexion situées respectivement sur la deuxième et/ou la première plaque.

2. Procédé selon la revendication 1, caractérisé en ce que lesdites ouvertures d'accès sont indépendantes les unes des autres et associées chacune à une cellule individuelle.

3. Procédé selon la revendication 1, dans lequel les cellules sont réparties en rangées et en colonnes, caractérisé en ce que les ouvertures d'accès sont communes à toutes les cellules d'une colonnes ou d'une rangées.

4. Procédé selon l'une des revendications 1 à 4, caractérisé en ce qu'il comprend en outre une étape de test électriques des cellules du lot.

5. Procédé selon la revendication 4, caractérisé en ce que l'étape de test consiste à amener les pointes de test d'une ou plusieurs têtes de mesure avec les plages de connexions des cellules et à tester les paramètres optiques et électriques desdites cellules.

6. Procédé selon l'une quelconques des revendications précédentes, caractérisé en ce que les ouvertures sont découpées au jet d'eau.

7. Procédé selon l'une quelconques des revendications précédentes, caractérisé en ce qu'il comprend l'étape qui consiste à appliquer sur chaque plaque un film polarisant et présentant des dégagements correspondant auxdites ouvertures d'accès aux plages de connexion des cellules.

8. Procédé selon la revendication 1, caractérisé en ce qu'il comprend en outre les étapes consistant à diviser le lot en cellules individuelles par rayure et cassure des première et deuxième plaques le long du contour de chaque cellule.

9. Procédé selon l'une des revendications précédentes, caractérisé en ce qu'il comprend en outre l'étape qui consiste à appliquer sur au moins une desdites plaques une couche protectrice contre le rayonnement ultraviolet.

10. Procédé selon l'une des revendications précédentes caractérisé en ce qu'il comprend en outre l'étape qui consiste à appliquer une couche noire d'absorption de la lumière sur seulement une plaque.
